# FASCICULE DE BREVET EUROPEEN

(11) **EP 1 204 521 B1**
(45) Date de publication et mention de la délivrance du brevet: **06.04.2005**
(21) Numéro de dépôt: 00956231.5
(22) Date de dépôt: 20.07.2000
(51) Int. Cl.: B29C 47/10, B29C 67/24, C08G 63/08

(54) **PROCEDE DE MODIFICATION D'UN MATERIAU POLYMERIQUE ET PROCEDE DE SYNTHESE D'UN MATERIAU POLYMERIQUE, AVEC INTRODUCTION D'AU MOINS UN COMPOSE CHIMIQUE DANS UNE EXTRUDEUSE**
VERFAHREN ZUR ÄNDERUNG EINES POLYMEREN MATERIALS UND VERFAHREN ZUR SYNTHESE EINES POLYMEREN MATERIALS, MIT EINBRINGUNG MINDESTENS EINER CHEMISCHEN ZUSAMMENSETZUNG IN EINEN EXTRUDER
METHOD FOR MODIFYING A POLYMERIC MATERIAL AND METHOD FOR SYNTHESIZING A POLYMERIC MATERIAL, WITH INTRODUCION OF AT LEAST ONE CHEMICAL COMPOUND IN AN EXTRUDER

(30) Priorité: 27.07.1999 BE 9900511
(43) Date de publication de la demande: 15.05.2002
(73) Titulaire: SOLVAY (Société Anonyme), 1050 Bruxelles (BE)
(72) Inventeur: MANFREDI, Dino, B-9052 Zwijnaarde (BE); GAUTHY, Fernand, B-1780 Wemmel (BE)
(74) Mandataire: Jacques, Philippe
(86) Numéro de dépôt international: PCT/EP2000/006970
(87) Numéro de publication internationale: WO 2001/007232

(56) Documents cités:
- EP-A- 0 796 714
- EP-A- 0 878 289
- WO-A-96/14354
- FR-A- 2 563 836
- US-A- 3 461 498
- US-A- 5 468 837
- US-A- 5 882 787
- PARK C B ET AL: "FILAMENTARY EXTRUSION OF MICROCELLULAR POLYMERS USING A RAPID DECOMPRESSIVE ELEMENT" POLYMER ENGINEERING & SCIENCE,US,SOCIETY OF PLASTICS ENGINEERS, vol. 36, no. 1, 15 janvier 1996 (1996-01-15), pages 34-48, XP000583331 ISSN: 0032-3888

## Description

L'invention concerne un procédé de modification d'un matériau polymérique et un procédé de synthèse d'un matériau polymérique, avec introduction d'au moins un composé chimique dans une extrudeuse.

La technique dite de l'extrusion réactive consiste à utiliser des dispositifs bien connus d'extrusion de matériaux à extruder à l'état fondu (appelés plus simplement extrudeuses).

Cette technique de l'extrusion réactive est utilisée non seulement pour l'extrusion de matériaux polymériques, pour la synthèse de matériaux polymériques au départ de matériaux à polymériser mais aussi pour la transformation chimique ultérieure des matériaux polymériques obtenus. Ces différents procédés nécessitent habituellement l'ajout d'au moins un composé chimique.

Une difficulté majeure rencontrée lors de l'application de cette technique apparaît lorsque des composés chimiques à l'état fluidifié doivent être ajoutés. Il est en effet alors très difficile d'assurer leur incorporation dans le matériau à extruder sans que des problèmes dus à la distribution hétérogène des composés chimiques dans le matériau à extruder apparaissent.

Ceci est d'autant plus vrai lorsque les quantités de composés chimiques à introduire sont relativement faibles, par exemple de quelques dizaines à quelques centaines de microlitres par minute.

Une des solutions déjà proposées par le passé a été de diluer les composés chimiques dans des solvants organiques. Des inconvénients majeurs ont cependant été rencontrés lors de l'utilisation de ces solvants. Parmi ceux-ci, on peut notamment citer la solubilité limitée de certains composés chimiques dans les solvants organiques, la toxicité de certains de ces solvants organiques, le temps nécessaire pour préparer les solutions de composés chimiques dans les solvants, l'élimination du solvant par après mais aussi l'apparition de réactions secondaires non souhaitées dues à la présence de solvant.

Une autre solution a été d'imprégner le matériau à extruder avec le ou les composés chimiques avant de les introduire dans l'extrudeuse. Cette solution demande néanmoins une manipulation supplémentaire qui est coûteuse et laborieuse. De plus, elle ne permet pas toujours d'avoir une flexibilité élevée quant à l'introduction des composés chimiques.

Le document EP-A-0 796 714, qui représente l'art antérieur le plus proche, décrit un procédé de modification d'un matériau polymérisé selon lequel on introduit le matériau dans une extrudeuse équipée d'un dispositif d'introduction, on injecte un composé chimique et un fluide, par exemple un gaz inerte, dans une chambre de mélange du dispositif d'introduction, on introduit le mélange ainsi obtenu à l'intérieur de l'extrudeuse, puis on extrude le matériau polymérique en permettant une réaction entre celui-ci et le composé chimique.

EP-A-0 796 714 décrit aussi la synthèse d'un matériau polymérique, obtenue en appliquant les étapes du procédé précédent à un matériau à polymériser, avec polymérisation du matériau dans l'extrudeuse ensemble avec le mélange.

Afin de remédier aux inconvénients présentés par les solutions proposées par le passé, la présenté invention a tout d'abord pour objet un procédé permettant d'incorporer de manière continue au moins un composé chimique.

A cet effet, la présente invention concerne un procédé selon lequel on effectue les étapes suivantes :
- introduire un matériau à extruder dans une extrudeuse,
- introduire dans l'extrudeuse au moins un mélange d'au moins un composé chimique et du dioxyde de carbone et
- extruder le matériau ensemble avec le ou les mélanges, comme spécifié aux revendications 1 et 8.

Lors de cette dernière étape du procédé, le dioxyde de carbone peut être mélangé ou non avec le matériau à extruder au même titre que le composé chimique. De manière préférée, le dioxyde de carbone étant à l'état gazeux dans l'extrudeuse, il n'est pas mélangé avec le matériau à extruder au même titre que le composé chimique.

Par extrudeuse, on entend désigner tout dispositif continu comprenant au moins une zone d'alimentation et, à sa sortie, une zone d'évacuation précédée d'une zone de compression, cette dernière forçant la masse fondue à passer au travers de la zone d'évacuation.

L'extrudeuse peut comprendre notamment les parties suivantes :
i. au moins une zone d'alimentation (trémie d'alimentation ou injecteur),
ii. un ou plusieurs éléments de vis permettant la propagation du matériau à extruder,
iii. éventuellement un ou plusieurs éléments malaxeurs,
iv. une ou plusieurs zones d'échauffement et/ou de réaction dans lesquelles le matériau à extruder est à l'état fluidifié,
v. à la sortie, une zone de compression suivie d'une zone d'évacuation, la zone de compression ayant pour fonction de compresser la matière à extruder afin de la forcer au travers de la zone d'évacuation de l'extrudeuse,

Les parties (i) à (v) ne sont pas nécessairement disposées dans cet ordre.

La zone d'évacuation peut en outre éventuellement être suivie d'un dispositif de granulation ou d'un dispositif donnant à la matière extrudée une forme profilée, telle qu'un film.

Les extrudeuses pouvant convenir sont notamment les extrudeuses du type monovis, les extrudeuses du type co-malaxeur telles que par exemple les extrudeuses commercialisée par la société BUSS, les extrudeuses du type bi-vis co-rotatives interpénétrées ou non interpénétrées telles que commercialisées par exemple par la société WERNER & PFLEIDERER, les extrudeuses du type bi-vis contrarotatives interpénétrées ou non interpénétrées et les extrudeuses du type multi-vis. Avantageusement, il sera fait appel à une extrudeuse basée sur le travail de deux vis, qu'elles soient co- ou contra-rotatives.

Dans le procédé selon la revendication 1 ou 8, le ou les mélanges d'au moins un composé chimique et du dioxyde de carbone sont introduits dans une zone de l'extrudeuse où le matériau à extruder est à l'état fluidifié.

Tout dispositif permettant l'introduction du mélange d'au moins un composé chimique et du dioxyde de carbone peut être utilisé.

Le procédé selon la revendication 1 ou 8 se caractérise également par le fait que le ou les mélanges d'au moins un composé chimique et du dioxyde de carbone sont introduits au moyen d'au moins un dispositif d'introduction comportant un injecteur disposé perpendiculairement au fourreau de l'extrudeuse.

De manière particulièrement préférée, le ou les mélanges d'au moins un composé chimique et du dioxyde de carbone sont introduits au moyen d'un dispositif d'introduction comprenant un injecteur disposé perpendiculairement à une zone où le matériau à extruder est à l'état fluidifié.

Selon les conditions de température et de pression, le dioxyde de carbone peut être à l'état liquide, gazeux ou supercritique. Si la pression est supérieure à 74 bar et la température supérieure à 31,4 °C, comme c'est le cas dans l'injecteur utilisé pour l'introduction dans l'extrudeuse, le dioxyde de carbone est à l'état supercritique.

Par composé chimique, on entend désigner, aux fins de la présente invention, tout composé chimique choisi parmi les composés chimiques capables de générer une modification chimique d'un matériau polymérique, ceux capables de générer une polymérisation d'un matériau à polymériser en un matériau polymérique (appelés aussi amorceurs chimiques) mais aussi ceux qui ne génèrent pas de modification chimique dans le matériau polymérique mais qui lui apportent certains avantages après qu'ils aient été extrudés en sa présence. Parmi cette dernière catégorie, on peut citer par exemple des additifs classiques des matériaux polymériques (stabilisants, lubrifiants, ...).

Le procédé selon la revendication 1 ou 8 s'applique donc non seulement à l'introduction dans l'extrudeuse d'un composé chimique unique en mélange avec le dioxyde de carbone, mais aussi à l'introduction de plusieurs composés chimiques en mélange avec le dioxyde de carbone et à l'introduction d'un ou de plusieurs mélanges d'un ou de plusieurs composés chimiques en mélange avec le dioxyde de carbone.

Le ou les composés chimiques introduits au moyen du procédé selon l'invention sont à l'état fluidifié.

Par composé chimique à l'état fluidifié, on entend désigner, aux fins de la présente invention, tout composé chimique se trouvant dans un état fluide à la température et à la pression d'introduction dans l'extrudeuse. Parmi ceux-ci, on peut citer les composés chimiques qui sont liquides à la température ordinaire mais aussi les composés chimiques qui, bien qu'étant solides à la température ordinaire, sont liquides, éventuellement visqueux, à la température et à la pression du dispositif d'introduction dans l'extrudeuse.

Par "un matériau à extruder", on entend désigner, aux fins de la présente invention, tout matériau capable d'être extrudé. On peut citer par exemple les matériaux polymériques mais aussi les matériaux à polymériser. Le terme "un matériau" désigne, aux fins de la présente invention, aussi bien un matériau unique qu'un mélange de plusieurs matériaux. Le procédé selon la présente invention s'applique dès lors pour un ou plusieurs matériaux polymériques, un ou plusieurs matériaux à polymériser mais aussi les mélanges d'au moins un matériau polymérique et d'au moins un matériau à polymériser.

Par "matériau à extruder à l'état fluidifié", on entend désigner, aux fins de la présente invention, que le matériau à extruder défini ci-dessus se trouve dans un état fluide, autrement dit liquide, éventuellement visqueux, à la température et à la pression de l'extrudeuse. En règle générale, dans le procédé selon la revendication 1 ou 8, les matériaux à polymériser sont à l'état liquide et les matériaux polymériques sont à l'état liquide visqueux à la température et à la pression de l'extrudeuse.

Le dispositif d'introduction qui équipe l'extrudeuse utilisée dans la présente invention comprend :
- une première pompe (1) pour l'alimentation d'au moins un composé chimique dans la chambre de mélange,
- une seconde pompe (1') pour l'alimentation de dioxyde de carbone dans la chambre de mélange,
- une chambre de mélange et
- un injecteur.

Ce dispositif est habituellement bien adapté pour introduire tout composé chimique à l'état fluidifié.

Ce dispositif est en général bien adapté pour introduire des composés chimiques qui sont liquides à la température ordinaire. En général, ce dispositif peut également être utilisé pour introduire des composés chimiques qui sont solides à la température ordinaire. Dans ce dernier cas, une adaptation du dispositif est nécessaire pour qu'il puisse être porté à une température telle que ces composés chimiques se retrouvent dans un état fluidifié, autrement dit liquide, éventuellement visqueux.

Ce dispositif est habituellement bien adapté pour introduire des quantités de composé chimique inférieures ou égales à 2 ml/min., de manière préférée inférieures ou égales à 1 ml/min., de manière particulièrement préférée inférieures ou égales à 600 µl/min.

Ce dispositif est habituellement bien adapté pour introduire des quantités de composé chimique supérieures ou égales à 1 µl/min., de manière préférée supérieures ou égales à 3 µl/min., de manière particulièrement préférée supérieures ou égales à 5 µl/min.

Le dioxyde de carbone est refroidi préalablement à son arrivée dans la première pompe (1'). Pour ce faire, un cryo-thermostat est généralement placé entre le réservoir de dioxyde de carbone et la pompe 1'.

En ce qui concerne les pompes utilisées pour l'alimentation du ou des composés chimiques et du dioxyde de carbone dans la chambre de mélange, toute pompe permettant de faire circuler de faibles quantités de composés peut être utilisée.

Toute chambre de mélange assurant un mélange optimal du ou des composés chimiques introduits en faible quantité et du dioxyde de carbone, peut être utilisée dans ce dispositif, qu'elle soit équipée ou non d'un système d'agitation.

La chambre de mélange utilisée de préférence dans ce dispositif est équipée d'un système d'agitation.

Habituellement, la quantité du ou des composés chimiques dans le mélange de celui-ci ou de ceux-ci avec le dioxyde de carbone dans la chambre de mélange, est inférieure ou égale à 50 %, de préférence inférieure ou égale à 30 %, de manière particulièrement préférée inférieure ou égale à 15 % en volume.

Tout injecteur pouvant travailler sous pression élevée peut être utilisé dans ce dispositif.

Un capteur de pression est utilisé pour relever la pression au niveau de l'injecteur.

La pression au niveau de l'injecteur est d'au moins 74 bar, de préférence d'au moins 85 bar, de manière particulièrement préférée d'au moins 90 bar, de manière tout particulièrement préférée d'au moins 100 bar.

Comme la température au niveau de l'injecteur est suffisamment élevée, le dioxyde de carbone est alors à l'état supercritique au niveau de l'injecteur.

L'extrudeuse utilisée dans la présente invention comprend une zone d'alimentation, une zone de compression et une zone d'évacuation, et est équipée d'au moins un dispositif d'introduction comme décrit ci-dessus.

Par au moins un dispositif d'introduction, on entend désigner un ou plusieurs dispositifs d'introduction qui permettent d'introduire simultanément ou séparément un ou plusieurs composés chimiques dans le flux de matériau à extruder.

L'extrudeuse peut également contenir, de préférence après la zone (iv), une zone de dégazage afin d'éliminer les quantités excessives de composés chimiques n'ayant pas réagi, le dioxyde de carbone et éventuellement les sous-produits générés lors de l'extrusion. Le dioxyde de carbone peut également être évacué par la zone d'alimentation de l'extrudeuse.

L'injecteur de chaque dispositif d'introduction est de préférence disposé perpendiculairement au fourreau de l'extrudeuse et débouche tangentiellement au filet de la vis d'extrusion.

Avantageusement, l'injecteur de chaque dispositif d'introduction est disposé perpendiculairement à une zone où le matériau à extruder est à l'état fluidifié. De cette manière, le ou les composés chimiques introduits sont pulvérisés sur le matériau à l'état fluidifié ou injectés dans le matériau fluidifié.

Une telle extrudeuse est particulièrement intéressante pour l'extrusion, la modification chimique et la synthèse de matériaux polymériques.

Par matériau polymérique, on entend désigner, aux fins de la présente invention, aussi bien un matériau polymérique unique que les mélanges d'au moins deux matériaux polymériques.

Parmi les matériaux polymériques, on peut citer par exemple les polymères vinyliques mais aussi les polyesters aliphatiques thermoplastiques. Parmi les polymères vinyliques, on peut citer les homopolymères et copolymères d'oléfines et les homopolymères et copolymères vinyliques halogénés. Parmi ces derniers, on peut nommer les homopolymères et copolymères du fluorure de vinylidène. Parmi les polyesters aliphatiques thermoplastiques, on peut citer par exemple les polymères de l'ε-caprolactone.

Selon un aspect de la présente invention, on propose donc un procédé de modification d'un matériau polymérique au moyen de l'extrudeuse décrite ci-dessus, selon lequel :
- on introduit un matériau polymérique dans l'extrudeuse,
- dans le ou chaque dispositif d'introduction présent :
   - on introduit au moins un composé chimique, via une pompe, dans la chambre de mélange,
   - on introduit le dioxyde de carbone, préalablement refroidi, via une pompe dans la chambre de mélange,
   - on mélange le ou les composés chimiques et le dioxyde de carbone dans la chambre de mélange,
- on introduit le ou les mélanges ainsi obtenus à l'intérieur de l'extrudeuse et
- on extrude le matériau polymérique ensemble avec le ou les mélanges dans des conditions permettant une réaction entre au moins un des composés chimiques et le matériau polymérique, comme spécifié à la revendication 1.

Un tel procédé de modification est particulièrement intéressant pour la modification de matériaux polymériques, tels ceux cités ci-dessus, par réaction avec un composé chimique comme par exemple un peroxyde organique.

Selon un autre aspect de la présente invention, on propose également un procédé de synthèse d'un matériau polymérique au moyen de l'extrudeuse décrite ci-dessus, selon lequel :
- on introduit un matériau à polymériser dans l'extrudeuse,
- dans le ou chaque dispositif d'introduction présent :
   - on introduit au moins un composé chimique, via une pompe, dans la chambre de mélange,
   - on introduit le dioxyde de carbone, préalablement refroidi, via une pompe dans la chambre de mélange,
   - on mélange le ou les composés chimiques et le dioxyde de carbone dans la chambre de mélange,
- on introduit le ou les mélanges ainsi obtenus à l'intérieur de l'extrudeuse et
- on polymérise le matériau à polymériser ensemble avec le ou les mélanges dans des conditions permettant une réaction entre au moins un des composés chimiques et le matériau à polymériser et on extrude le matériau polymérique ainsi formé, comme spécifié à la revendication 8.

Dans le procédé de synthèse d'un matériau polymérique selon l'invention, au moins un des composés chimiques est un amorceur chimique c'est-à-dire un composé capable d'amorcer la polymérisation du matériau à polymériser.

Dans le procédé de synthèse d'un matériau polymérique selon l'invention, l'injecteur de chaque dispositif d'introduction pour le ou les amorceurs chimiques est de préférence disposé perpendiculairement à la zone d'alimentation de l'extrudeuse.

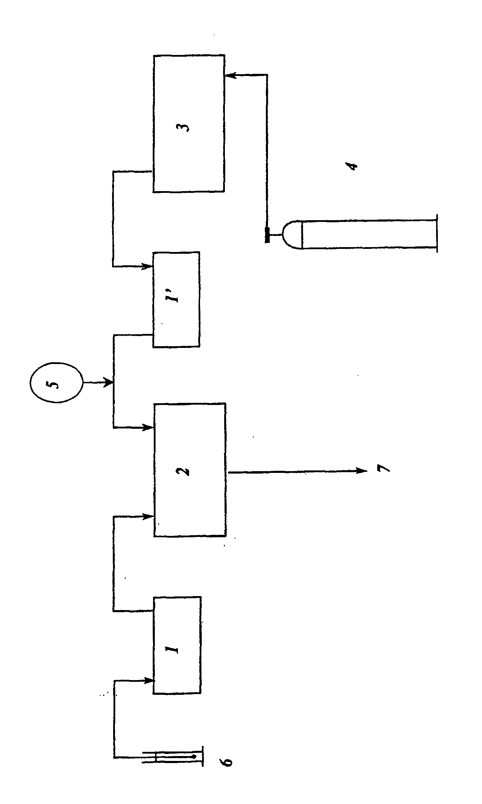

Un mode de réalisation avantageux du dispositif d'introduction est décrit plus en détail à titre d'illustration à la figure 1.

La figure 1 représente un réservoir 6 pour un composé chimique (il pourrait y en avoir plusieurs au sens de la présente invention) qui est alimenté à la chambre de mélange 2 par l'intermédiaire d'une pompe 1. Le dioxyde de carbone contenu dans le réservoir 4 est refroidi dans le cryo-thermostat 3 avant d'être alimenté dans la chambre de mélange 2 par l'intermédiaire d'une pompe 1'. Le mélange du ou des (si plusieurs réservoirs sont présents) composés chimiques et du dioxyde de carbone réalisé dans la chambre de mélange est ensuite évacué vers l'injecteur 7 dont la pression est relevée au moyen d'un capteur de pression 5.

Le dispositif d'introduction qui équipe l'extrudeuse utilisée dans la présente invention présente de nombreux avantages. Ainsi, il permet d'incorporer de manière continue un ou plusieurs composés chimiques dans un matériau à extruder. Il permet par ailleurs d'introduire de faibles quantités de ce ou ces composés chimiques, et cela avec un débit d'introduction régulier qui peut par ailleurs être maintenu constant et ce, même lorsque les débits en composés chimiques sont particulièrement faibles. Le dispositif selon l'invention permet en outre d'éviter l'usage de solvants organiques dont les désavantages ont été cités ci-dessus. Il permet aussi d'éviter des temps de purge relativement longs et un nettoyage lourd et difficile de l'installation. Le dispositif selon l'invention présente enfin l'avantage d'une haute flexibilité quant à la quantité du ou des composés chimiques à introduire et quant à l'endroit où l'introduction du ou des composés chimiques peut avoir lieu.

L'exemple qui suit sert à illustrer la présente invention sans pour autant en limiter la portée.

### Exemple

Cet exemple décrit la modification d'un polymère de l'ε-caprolactone par la réaction de celui-ci avec un composé chimique qui est un peroxyde organique.

### Polymère de l'ε-caprolactone

Le polymère de l'ε-caprolactone est la poly-ε-caprolactone CAPA®680 vendue par SOLVAY INTEROX.

Elle est caractérisée par une masse moléculaire moyenne en nombre de 70 000 g/mole. La masse moléculaire est mesurée par chromatographie par perméation de gel, en utilisant le chloroforme comme solvant, au moyen d'une colonne de type Polymer Laboratories Mix-C et d'un réfractomètre de type Waters Differential Refractometer R401. La concentration de l'échantillon est de 20 mg/ml et le débit de 1 ml/min. Les standards utilisés sont des standards polystyrène et le facteur de conversion utilisé est de 0,6.

La poly-ε-caprolactone se caractérise par une température de fusion de 58-60 °C mesurée par analyse thermique différentielle, au deuxième passage et avec une vitesse de balayage de 10 °K/min.

La poly-ε-caprolactone se caractérise également par un MFI de 2,11 dg/min, obtenu en mesurant la quantité de polymère passant au travers d'une filière cylindrique calibrée (hauteur 8 mm +/- 0,025, diamètre 2,095 mm +/- 0,003), à une température de 100 °C et sous l'action d'une masse de 5 kg.

### Peroxyde organique

Le peroxyde organique est le 2,5-diméthyl-2,5-di-t-butylperoxyhexane (DHBP) vendu sous la marque LUPERSOL® 101 par PEROXID CHEMIE.

### Extrudeuse

L'extrudeuse utilisée est l'extrudeuse double vis co-rotative WERNER & PFLEIDERER ZSK® 40. Le diamètre des vis est de 40 mm et leur longueur est de 1360 mm. La vitesse de rotation des vis est de 200 rpm (rotations par minute).

L'extrudeuse est aménagée de manière à ce qu'elle comprenne successivement une zone d'alimentation, une zone de fusion de la matière, une zone d'homogénéisation, une zone de réaction et une zone d'évacuation précédée d'une zone de compression. Chacune de ces zones se trouve à une température bien spécifique.

La zone d'alimentation se trouve à une température inférieure ou égale à 20 °C.

La zone de fusion de la matière se trouve à une température de 130 °C. Le DHBP est introduit dans cette zone en mélange avec le dioxyde de carbone au moyen du dispositif d'introduction décrit ci-dessous.

La zone d'homogénéisation se trouve à une température de 130 °C.

La zone de réaction se trouve à une température de 180 °C.

La zone de compression est à une température de 180 °C.

La zone d'évacuation est à une température de 180 °C.

### Dispositif d'introduction

Le dispositif d'introduction du mélange du peroxyde organique et du dioxyde de carbone est schématiquement représenté à la figure 1.

Le DHBP contenu dans le réservoir 6 est alimenté à la chambre de mélange 2 par l'intermédiaire de la pompe 1. Le dioxyde de carbone liquide contenu dans le réservoir 4 est refroidi à -10 °C dans le cryothermostat 3 avant d'être alimenté dans la chambre de mélange 2 par l'intermédiaire d'une pompe 1'. Le mélange du DHBP et du dioxyde de carbone liquide réalisé dans la chambre de mélange est ensuite évacué dans l'injecteur 7 dont la pression est relevée au moyen d'un capteur de pression 5.

Le réservoir de dioxyde de carbone liquide 4 est une bonbonne sous pression de dioxyde de carbone.

Les pompes 1 et 1' sont des pompes du type GILSON 305 ou 306. La tête de la pompe 1' prévue pour le dioxyde de carbone est équipée d'un thermostat kit 5/10/25SG de GILSON qui permet de refroidir la tête à -10°C. Le liquide refroidissant est l'isopropanol refroidi dans un cryo-thermostat type JUBALO F30.

Ce même cryo-thermostat est utilisé pour refroidir le dioxyde de carbone liquide (cryo-thermostat 3)

La chambre de mélange 2 est un mélangeur analytique muni d'une hélice du type GILSON 811C.

L'injecteur 7 est un injecteur permettant de travailler sous haute pression (supérieure à 74 bar).

Un capteur de pression 5 du type GILSON 806 est placé entre la pompe 1' et la chambre de mélange 2 afin de relever la pression dans l'injecteur (entre 90 et 120 bar).

L'injecteur du dispositif d'introduction est disposé perpendiculairement au fourreau de l'extrudeuse et débouche tangentiellement au filet de la vis d'extrusion. Il est précisément disposé perpendiculairement à la zone de fusion de l'extrudeuse. Le dioxyde de carbone se trouve généralement à l'état supercritique au niveau de l'injecteur.

### Modification du polymère de l'ε-caprolactone par le DHBP

La poly-ε-caprolactone CAPA®680 est introduite dans la zone d'alimentation de l'extrudeuse décrite ci-dessus avec un débit de 30 kg/h et se propage au travers des différentes zones de l'extrudeuse.

Dans la zone de fusion de l'extrudeuse, le DHBP, en mélange avec le dioxyde de carbone, est pulvérisé sur la poly-ε-caprolactone au moyen du dispositif d'introduction décrit ci-dessus. Le DHBP est introduit à raison de 1 g par kg de poly-ε-caprolactone CAPA®680 et à raison de 570 µl de DHBP dans 5 ml de dioxyde de carbone par minute.

La poly-ε-caprolactone obtenue se caractérise par un MFI de 0,42 dg/min, obtenu en mesurant la quantité de polymère passant au travers d'une filière cylindrique calibrée (hauteur 8 mm +/- 0,025, diamètre 2,095 mm +/- 0,003), à une température de 100 °C et sous l'action d'une masse de 5 kg.

## Revendications

1. Procédé de modification d'un matériau polymérique au moyen d'une extrudeuse comprenant une zone d'alimentation, une zone de compression et une zone d'évacuation, équipée d'au moins un dispositif d'introduction comprenant une première pompe (1), une seconde pompe (1'), une chambre de mélange (2), un capteur de pression (5) et un injecteur (7), selon lequel :
- on introduit le matériau polymérique dans l'extrudeuse,
- dans le ou chaque dispositif d'introduction présent :
■ on introduit au moins un composé chimique à l'état fluidifié, via la première pompe (1), dans la chambre de mélange (2),
■ on introduit du dioxyde de carbone, préalablement refroidi, via la seconde pompe (1') dans la chambre de mélange (2),
■ on mélange le ou les composés chimiques et le dioxyde de carbone dans la chambre de mélange (2),
- on introduit le ou les mélanges ainsi obtenus à l'intérieur de l'extrudeuse dans une zone de l'extrudeuse où le matériau polymérique est à l'état fluidifié, via l'injecteur (7), dans lequel la pression, relevée au moyen du capteur de pression (5), est supérieure à 74 bar et la température est supérieure à 31,4°C, de sorte que le dioxyde de carbone est à l'état supercritique et
- on extrude le matériau polymérique ensemble avec le ou les mélanges dans des conditions permettant une réaction entre au moins un des composés chimiques et le matériau polymérique.

2. Procédé selon la revendication 1, **caractérisé en ce que** la zone de l'extrudeuse dans laquelle on introduit le ou les mélanges est une zone où le matériau polymérique est à l'état liquide visqueux.

3. Procédé selon la revendication 1, **caractérisé en ce que** le matériau polymérique est un polymère vinylique.

4. Procédé selon la revendication 3, **caractérisé en ce que** le polymère vinylique est un homopolymère d'oléfine, un copolymère d'oléfine, un hompolymère vinylique halogéné ou un copolymère vinylique halogéné.

5. Procédé selon la revendication 3, **caractérisé en ce que** le polymère vinylique est un homopolymère du fluorure de vinylidène ou un copolymère du fluorure de vinylidène.

6. Procédé selon la revendication 1, **caractérisé en ce que** le matériau polymérique est un polyester aliphatique thermoplastique.

7. Procédé selon la revendication 6, **caractérisé en ce que** polyester aliphatique thermoplastique est un polymère de l'ε-caprolactone.

8. Procédé de synthèse d'un matériau polymérique au moyen d'une extrudeuse comprenant une zone d'alimentation, une zone de compression et une zone d'évacuation, équipée d'au moins un dispositif d'introduction comprenant une première pompe (1), une seconde pompe (1'), une chambre de mélange (2), un capteur de pression (5) et un injecteur (7), selon lequel :
- on introduit un matériau à polymériser dans l'extrudeuse,
- dans le ou chaque dispositif d'introduction présent :
■ on introduit au moins un composé chimique à l'état fluidifié, via la première pompe (1), dans la chambre de mélange (2),
■ on introduit du dioxyde de carbone, préalablement refroidi, via la seconde pompe (1') dans la chambre de mélange (2),
■ on mélange le ou les composés chimiques et le dioxyde de carbone dans la chambre de mélange (2),
- on introduit le ou les mélanges ainsi obtenus à l'intérieur de l'extrudeuse dans une zone de l'extrudeuse où le matériau à polymériser est à l'état fluidifié, via l'injecteur (7) dans lequel la pression, relevée au moyen du capteur de pression (5), est supérieure à 74 bar et la température est supérieure à 31,4°C, de sorte que le dioxyde de carbone est à l'état supercritique et
- on polymérise le matériau à polymériser ensemble avec le ou les mélanges dans des conditions permettant une réaction entre au moins un des composés chimiques et le matériau à polymériser et on extrude le matériau polymérique ainsi formé.

9. Procédé selon la revendication 8, **caractérisé en ce que** la zone de l'extrudeuse dans laquelle on introduit le ou les mélanges est une zone où le matériau à polymériser est à l'état liquide.

10. Procédé selon la revendication 8, **caractérisé en ce que** le matériau polymérique est un polyester aliphatique thermoplastique.

11. Procédé selon la revendication 9, **caractérisé en ce que** polyester aliphatique thermoplastique est un polymère de l'ε-caprolactone.

12. Procédé selon la revendication 1 ou 8, **caractérisé en ce que** le ou les composés chimiques sont des liquides à la température ordinaire.

13. Procédé selon la revendication 1 ou 8, **caractérisé en ce que** le ou les composés chimiques sont des solides à la température ordinaire, et que le dispositif d'introduction a été adapté de sorte que ce ou ces composés chimiques se retrouvent à l'état fluidifié.

14. Procédé selon l'une quelconque des revendications précédentes, **caractérisé en ce que** la pression à l'intérieur de l'injecteur (7) vaut au moins 90 bar.

15. Procédé selon la revendication 14, **caractérisé en ce que** la pression à l'intérieur de l'injecteur (7) vaut au moins 100 bar.

16. Procédé selon l'une quelconque des revendications précédentes, **caractérisé en ce que** l'extrudeuse comprend un fourreau et que l'injecteur (7) est disposé perpendiculairement au fourreau.

17. Procédé selon la revendication 16, **caractérisé en ce que** l'extrudeuse comprend une vis d'extrusion et que l'injecteur (7) débouche tangentiellement au filet de la vis d'extrusion.

18. Procédé selon l'une quelconque des revendications précédentes, **caractérisé en ce que** la chambre de mélange (2) est équipée d'un système d'agitation.

## Patentansprüche

1. Verfahren zum Modifizieren eines polymeren Materials mit Hilfe eines eine Speisezone, eine Kompressionszone und eine Austragszone umfassenden Extruders, der mit wenigstens einer Einbringungsvorrichtung ausgerüstet ist, die eine erste Pumpe (1), eine zweite Pumpe (1'), eine Mischkammer (2), einen Druckgeber (5) und eine Düse (7) umfaßt, wonach man :
- das Polymermaterial in den Extruder einführt,
- in der oder in jeder vorhandenen Einbringungsvorrichtung :
• wenigstens eine chemische Verbindung über die erste Pumpe (1) im Fluidzustand in die Mischkammer (2) einbringt,
• über die zweite Pumpe (1') zuvor abgekühltes Kohlendioxid in die Mischkammer (2) einbringt,
• in der Mischkammer (2) die eine oder die mehreren chemischen Verbindungen mit dem Kohlendioxid vermischt,
- das oder die solcherart erhaltenen Gemische über die Düse (7) in das Extruderinnere in eine Zone des Extruders einführt, worin das Polymermaterial im fluidisierten Zustand vorliegt, worin der Druck, gemessen mit Hilfe des Druckgebers (5), über 74 bar beträgt und die Temperatur über 31,4°C liegt, sodaß das Kohlendioxid im überkritischen Zustand vorliegt, und
- das Polymermaterial zusammen mit dem oder mit den Gemischen unter Bedingungen extrudiert, die eine Reaktion zwischen wenigstens einer der chemischen Verbindungen und dem Polymermaterial ermöglichen.

2. Verfahren nach Anspruch 1, **dadurch gekennzeichnet, daß** jene Zone des Extruders, in die das Gemisch oder die Gemische eingebracht werden, eine Zone ist, worin das Polymermaterial in einem viskosen flüssigen Zustand vorliegt.

3. Verfahren nach Anspruch 1, **dadurch gekennzeichnet, daß** das Polymermaterial ein Vinylpolymer ist.

4. Verfahren nach Anspruch 3, **dadurch gekennzeichnet, daß** das Vinylpolymer ein Olefinhomopolymer, ein Olefincopolymer, ein halogeniertes Vinylhomopolymer oder ein halogeniertes Vinylcopolymer ist.

5. Verfahren nach Anspruch 3, **dadurch gekennzeichnet, daß** das Vinylpolymer ein Vinylidenfluoridhomopolymer oder ein Vinylidenfluoridcopolymer ist.

6. Verfahren nach Anspruch 1, **dadurch gekennzeichnet, daß** das Polymermaterial ein aliphatischer thermoplastischer Polyester ist.

7. Verfahren nach Anspruch 6, **dadurch gekennzeichnet, daß** der aliphatische thermoplastische Polyester ein ε-Caprolactonpolymer ist.

8. Verfahren zur Synthese eines Polymermaterials mit Hilfe eines eine Speisezone, eine Kompressionszone und eine Austragszone umfassenden Extruders, der mit wenigstens einer Einführungsvorrichtung ausgestattet ist, die eine erste Pumpe (1), eine zweite Pumpe (1'), eine Mischkammer (2), einen Druckgeber (5) und eine Düse (7) umfaßt, wonach man :
- ein zu polymerisierende Material in den Extruder einführt,
- in der oder in jeder vorhandenen Einbringungsvorrichtung :
• wenigstens eine chemische Verbindung über die erste Pumpe (1) im Fluidzustand in die Mischkammer (2) einbringt,
• über die zweite Pumpe (1') zuvor abgekühltes Kohlendioxid in die Mischkammer (2) einbringt,
• in der Mischkammer (2) die eine oder die mehreren chemischen Verbindungen mit dem Kohlendioxid vermischt,
- das oder die solcherart erhaltenen Gemische über die Düse (7) in das Extruderinnere in eine Zone des Extruders einführt, worin das zu polymerisierende Material im fluidisierten Zustand vorliegt, worin der Druck, gemessen mit Hilfe des Druckgebers (5), über 74 bar beträgt und die Temperatur über 31,4°C liegt, sodaß das Kohlendioxid im überkritischen Zustand vorliegt, und
- das zu polymerisierende Material zusammen mit dem oder mit den Gemischen unter Bedingungen polymerisiert, die eine Reaktion zwischen wenigstens einer der chemischen Verbindungen und dem zu polymerisierenden Material ermöglichen, und das solcherart gebildete Polymermaterial extrudiert.

9. Verfahren nach Anspruch 8, **dadurch gekennzeichnet, daß** jene Zone des Extruders, in die das Gemisch oder die Gemische eingebracht werden, eine Zone ist, worin das zu polymerisierende Material in einem flüssigen Zustand vorliegt.

10. Verfahren nach Anspruch 8, **dadurch gekennzeichnet, daß** das Polymermaterial ein aliphatischer thermoplastischer Polyester ist.

11. Verfahren nach Anspruch 9, **dadurch gekennzeichnet, daß** der aliphatische thermoplastische Polyester ein ε-Caprolactonpolymer ist.

12. Verfahren nach Anspruch 1 oder 8, **dadurch gekennzeichnet, daß** die chemische Verbindung oder die chemischen Verbindungen bei gewöhnlicher Temperatur Flüssigkeiten sind.

13. Verfahren nach Anspruch 1 oder 8, **dadurch gekennzeichnet, daß** die chemische Verbindung oder die chemischen Verbindungen bei gewöhnlicher Temperatur Feststoffe sind und daß die Einbringungsvorrichtung derart adaptiert worden ist, daß diese chemische(n) Verbindung(en) in fluidisiertem Zustand vorliegt bzw. vorliegen.

14. Verfahren nach einem der vorstehenden Ansprüche, **dadurch gekennzeichnet, daß** der Druck im Inneren der Düse (7) wenigstens 90 bar beträgt.

15. Verfahren nach Anspruch 14, **dadurch gekennzeichnet, daß** der Druck im Inneren der Düse (7) wenigstens 100 bar beträgt.

16. Verfahren nach einem der vorstehenden Ansprüche, **dadurch gekennzeichnet, daß** der Extruder eine Scheide aufweist und daß die Düse (7) senkrecht zur Scheide angeordnet ist.

17. Verfahren nach Anspruch 16, **dadurch gekennzeichnet, daß** der Extruder eine Extrusionsschnecke aufweist und daß die Düse (7) tangentiell zum Gewinde der Extrusionsschnecke mündet.

18. Verfahren nach einem der vorstehenden Ansprüche, **dadurch gekennzeichnet, daß** die Mischkammer (2) mit einem Rührsystem ausgestattet ist.

## Claims

1. Method for modifying a polymeric material by means of an extruder comprising a feed zone, a compression zone and a discharge zone, equipped with at least one introduction device comprising a first pump (1), a second pump (1'), a mixing chamber (2), a pressure sensor (5) and an injector (7), according to which :
- the polymeric material is introduced into the extruder,
- in/into the or in/into each present introduction device :
• at least one chemical compound in the fluidized state is introduced, via the first pump (1), into the mixing chamber (2),
• precooled carbon dioxide is introduced, via the second pump (1'), into the mixing chamber (2),
• the chemical compound(s) and the carbon dioxide are mixed in the mixing chamber (2),
- the mixture(s) thus obtained is/are introduced into the interior of the extruder, into a zone of the extruder where the polymeric material is in the fluidized state, via the injector (7), in which the pressure, measured by the pressure sensor (5), is above 74 bar and the temperature is above 31.4°C, in such a way that the carbon dioxide is in the supercritical state, and
- the polymeric material is extruded together with the mixture(s) in conditions permitting reaction between at least one of the chemical compounds and the polymeric material.

2. Method according to Claim 1, **characterized in that** the zone of the extruder into which the mixture(s) is/are introduced is a zone where the polymeric material is in the viscous liquid state.

3. Method according to Claim 1, **characterized in that** the polymeric material is a vinyl polymer.

4. Method according to Claim 3, **characterized in that** the vinyl polymer is a homopolymer of an olefin, a copolymer of an olefin, a halogenated vinyl homopolymer or a halogenated vinyl copolymer.

5. Method according to Claim 3, **characterized in that** the vinyl polymer is a homopolymer of vinylidene fluoride or a copolymer ofvinylidene fluoride.

6. Method according to Claim 1, **characterized in that** the polymeric material is a thermoplastic aliphatic polyester.

7. Method according to Claim 6, **characterized in that** the thermoplastic aliphatic polyester is a polymer of ε-caprolactone.

8. Method for synthesizing a polymeric material by means of an extruder comprising a feed zone, a compression zone and a discharge zone, equipped with at least one introduction device comprising a first pump (1), a second pump (1'), a mixing chamber (2), a pressure sensor (5) and an injector (7), according to which :
- a material to be polymerized is introduced into the extruder,
- in/into the or in/into each present introduction device :
• at least one chemical compound in the fluidized state is introduced, via the first pump (1), into the mixing chamber (2),
• precooled carbon dioxide is introduced, via the second pump (1'), into the mixing chamber (2),
• the chemical compound(s) and the carbon dioxide are mixed in the mixing chamber (2),
- the mixture(s) thus obtained is/are introduced into the interior of the extruder, into a zone of the extruder where the material to be polymerized is in the fluidized state, via the injector (7), in which the pressure, measured by the pressure sensor (5), is above 74 bar and the temperature is above 31.4°C, in such a way that the carbon dioxide is in the supercritical state, and
- the material to be polymerized is polymerized together with the mixture(s) in conditions permitting reaction between at least one of the chemical compounds and the material to be polymerized, and the resultant polymeric material is extruded.

9. Method according to Claim 8, **characterized in that** the zone of the extruder into which the mixture(s) is/are introduced is a zone where the material to be polymerized is in the liquid state.

10. Method according to Claim 8, **characterized in that** the polymeric material is a thermoplastic aliphatic polyester.

11. Method according to Claim 9, **characterized in that** thermoplastic aliphatic polyester is a polymer of ε-caprolactone.

12. Method according to Claim 1 or 8, **characterized in that** the chemical compound(s) is/are liquid at room temperature.

13. Method according to Claim 1 or 8, **characterized in that** the chemical compound(s) is/are solid at room temperature and **in that** the introduction device has been adapted in such a way that this/these chemical compound(s) is/are in the fluidized state.

14. Method according to any one of the preceding claims, **characterized in that** the pressure in the interior of the injector (7) is at least 90 bar.

15. Method according to Claim 14, **characterized in that** the pressure in the interior of the injector (7) is at least 100 bar.

16. Method according to any one of the preceding claims, **characterized in that** the extruder comprises a barrel, and **in that** the injector (7) is arranged perpendicularly to the barrel.

17. Method according to Claim 16, **characterized in that** the extruder comprises an extrusion screw, and **in that** the injector (7) emerges tangentially to the extrusion screw flights.

18. Method according to any one of the preceding claims, **characterized in that** the mixing chamber (2) is equipped with an agitation system.
